# EUROPEAN PATENT SPECIFICATION

(11) **EP 2 330 665 B1**
(45) Date of publication and mention of the grant of the patent: **04.04.2018**
(21) Application number: 10192428.0
(22) Date of filing: 24.11.2010
(51) Int. Cl.: H01M 10/04, H01M 4/02, H01M 4/04, H01M 2/26, H01M 2/02

(54) **Electrode assembly**
Elektrodenanordnung
Ensemble formant électrode

(30) Priority: 07.12.2009 US 267383 P; 08.06.2010 US 796551
(43) Date of publication of application: 08.06.2011
(73) Proprietor: Samsung SDI Co., Ltd., Yongin-si, Gyeonggi-do 17084 (KR)
(72) Inventor: Ahn, Changbum, Yongin-si Gyeonggi-do (KR)
(74) Representative: Grey, Ian Michael

(56) References cited:
- EP-A2- 1 641 057
- WO-A1-2006/042416
- US-A1- 2006 051 662
- US-A1- 2006 257 736
- US-A1- 2008 020 279
- US-A1- 2008 241 672

## Description

The present invention relates to an electrode assembly and more particularly, to an electrode assembly capable of achieving easy alignment of a positive electrode plate and a negative electrode plate. The invention also provides a secondary battery formed from a plurality of electrode assemblies according to the invention and, to a method of manufacture of an electrode assembly according to the invention.

Recently, the use of portable electronic devices has increased with the rapid development of communication and computer industries. Rechargeable secondary batteries are widely used as power sources of portable electronic devices. A secondary battery generally includes an electrode assembly including a positive electrode plate, a negative electrode plate, and a separator disposed between the positive electrode plate and the negative electrode plate and insulating the positive electrode plate and the negative electrode plate from each other. The electrode assembly may be placed in an outer case together with an electrolyte.

When the electrode assembly is accommodated in the outer case, it is necessary to accurately align the positive and negative electrode plates.. In the conventional electrode assembly, however, the positive and negative electrode plates are of different sizes so that the area of one electrode coating is larger than the area of the other electrode coating, to ensure efficient charge and discharge of the electrode plates. However, since the positive and negative electrode plates have different sizes, it is not easy to properly align the positive and negative electrode plates with each other.

In order to eliminate substantially defects and problems encountered in the prior art described above, one embodiment of the present invention is to provide an electrode assembly having electrode plates that can easily be aligned with each other.

It is known from WO2006/257736A1 to provide an electrode assembly for a secondary battery comprising first and second electrode plates each having facing surfaces with an electrode coating thereon and, a separator comprising a separator layer disposed between said facing surfaces and extending across each surface of the second electrode plate to insulate said electrode plates from each other, wherein the electrode plates are of the same size, wherein the separating layer extends beyond the peripheral edges of said plate, said separating layers being coupled to each other beyond said peripheral edges of said second electrode plate to encapsulate the second electrode plate and insulate it from the first electrode plate, said separating layers also extending beyond the peripheral edges of said first electrode plate, wherein the separating layer comprises two sheets of material which are arranged with the second electrode plate interposed therebetween and said regions extending beyond the peripheral edges form fusing parts which are fused to each other to encapsulate the second electrode plate.

An electrode assembly according to the present invention is characterised in that each peripheral edge of the first electrode plate is aligned with a peripheral edge of the second electrode plate and the electrode coating on one of said facing surfaces covers a portion of said surface to provide an uncoated region such that the area of the electrode coating on said one of said facing surfaces is smaller than the area of the electrode coating on the other one of said facing surfaces and wherein the first electrode plate is a positive electrode and the second electrode plate is a negative electrode and the electrode coating covering a portion of a facing surface to provide an uncoated region covers a portion of a facing surface of the positive electrode.

In one embodiment, the electrode coating on the other facing surface covers the whole of said surface.

In a preferred embodiment, said uncoated region is located at a periphery of the facing surface.

The electrode plates may be rectangular in shape and have two parallel short side edges and two parallel long side edges. In this case, the uncoated region may extend from at least one of said parallel short side edges or from at least one of said parallel long side edges.

In a preferred embodiment, an electrode tab extends from one of said short side edges or one of said long side edges.

The uncoated region may extend along one of said short side edges and the electrode tab may then extend from the uncoated region.

Preferably, each electrode plate has a second surface and the electrode coating covers the second surface in addition to the facing surface of each electrode plate.

The electrode coating which covers a portion of the facing surface to provide an uncoated region on said positive electrode also covers a portion of the second surface of said same electrode to provide an uncoated region on said second surface.

It is also known to provide a secondary battery formed from a plurality of electrode assemblies according to any preceding claim, said electrode assemblies being positioned in stacked relation.

In a preferred embodiment, the first and second electrode plates and the separator of each electrode assembly are positioned in stacked relation.

The invention also provides a method of manufacturing an electrode assembly for a secondary battery comprising positive and negative electrode plates of the same size and each having facing surfaces with an electrode coating thereon, and a separator comprising a separator layer disposed between said facing surfaces and extending across each surface of the second electrode plate to insulate said electrode plates from each other, wherein the method includes the step of covering a portion of one of said facing surfaces with an electrode coating to provide an uncoated region, selecting the separating layers so that they extend beyond the peripheral edges of the positive and negative electrodes plate and coupling said layers beyond said peripheral edges to encapsulate the negative electrode plate and insulate it from the positive electrode plate, said separating layers also extending beyond the peripheral edges of said positive electrode plate, wherein the separating layer comprises two sheets of material which are arranged with the negative electrode plate interposed therebetween and said regions extending beyond the peripheral edges form fusing parts which are fused to each other to encapsulate the negative electrode plate, wherein the method further comprises the steps of arranging the positive and negative electrode plates such that each peripheral edge of the positive electrode plate is aligned with a peripheral edge of the negative electrode plate and covering a portion of one of said surfaces of the positive electrode plate with an electrode coating to provide an uncoated region such that the area of the electrode coating on said one of said facing surfaces of the positive electrode plate is smaller than the area of the electrode coating on the other one of said facing surfaces of the negative electrode plate.

Embodiments of the invention will now be described, by way of example only, and with reference to the accompanying drawings, in which:
FIG. 1 is a perspective view of a secondary battery according to an embodiment of the present invention;
FIGS. 2A and 2B illustrate a first electrode and a second electrode forming an electrode assembly of the secondary battery shown in FIG. 1, respectively;
FIG. 3 illustrates a first electrode forming an electrode assembly of a secondary battery according to another embodiment of the present invention;
FIG. 4 illustrates a first electrode forming an electrode assembly of a secondary battery according to still another embodiment of the present invention; and
FIGS. 5A and 5B illustrate a first electrode and a second electrode forming an electrode assembly of a secondary battery according to yet another embodiment of the present invention, respectively.

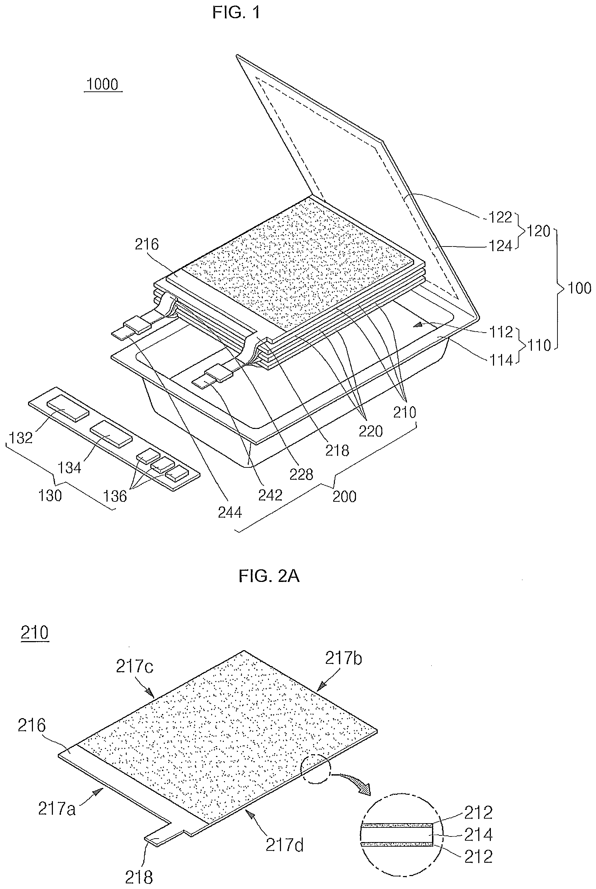

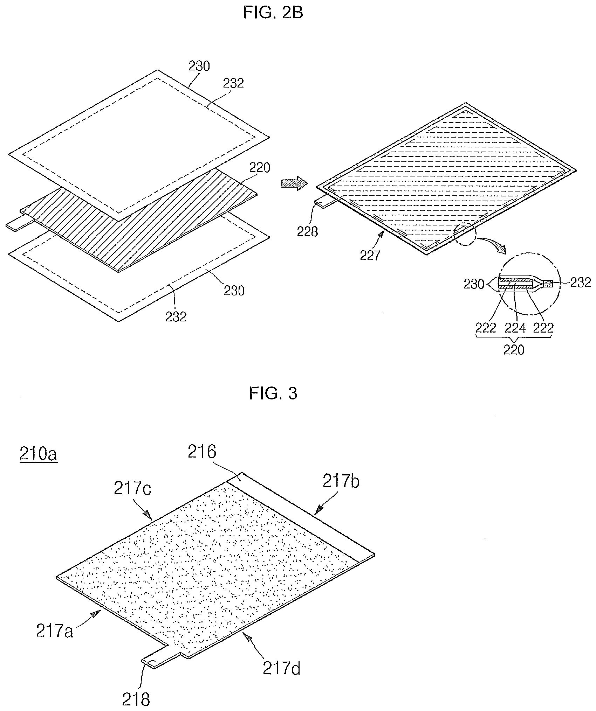

FIG. 1 is a perspective view of a secondary battery according to an embodiment of the present invention, and FIGS. 2A and 2B illustrate a first electrode and a second electrode forming an electrode assembly of the secondary battery shown in FIG. 1, respectively.

Referring to FIGS. 1 to 2B, the secondary battery 1000 includes an outer case 100 and an electrode assembly 200 accommodated in the outer case 100.

The secondary battery 1000 is of a pouch type.

The outer case 100 includes a main body 110 and a cover 120.

The main body 110 includes a cavity part 112 that is a space in which the electrode assembly 200 is accommodated, and a sealing part 114 that is extended from an entrance of the cavity part 112 and enlarged.

The cover 120 extends from any one edge of the sealing part 114 of the main body 110. The cover 120 completely covers the cavity part 112 of the main body 110 and is sealed with the sealing part 114 of the main body 110, providing for a cavity part cover area 122 and a sealing part 124, which correspond to the cavity part 112 and the sealing part 114 in the main body 110, respectively.

Therefore, the secondary battery 1000 according to the illustrated embodiment of the present invention can be provided by accommodating the electrode assembly 200 in the cavity part 112 of the main body 110 and then putting on the cover 120 to then be closely contacted with the main body 10. The sealing part 114 of the main body 110 and the sealing part 124 of the cover 120 may be sealed with each other by, for example, thermal fusion or ultrasonic fusion.

When or after the electrode assembly 200 is accommodated in the cavity part 112, an electrolyte is injected into the cavity part 112 for impregnating the electrode assembly 200. Alternatively, the secondary battery 1000 may also be provided such that once the electrode assembly 100 is accommodated and the outer case 100 is sealed, a first electrode lead 242 and a second electrode lead 244 extending from the electrode assembly 200 are exposed to the outside. The first electrode lead 242 and the second electrode lead 244 are electrically connected to a PCM module 130.

The PCM module 130 controls charge and discharge of the electrode assembly 200 and operations of the secondary battery 1000. Meanwhile, the PCM module 130 includes a control element 132, such as an IC element, a secondary protective element 134 for preventing over-current from flowing in the secondary battery 1000, and external terminals 136 connecting the secondary battery 1000 with external devices.

The electrode assembly 200 includes a first electrode plate 210, a second electrode plate 220, and a separator 230. The electrode assembly 200 is configured such that the first electrode plate 210 and the second electrode plate 220 are insulated from each other by the separator 230 interposed therebetween. Alternatively, the electrode assembly 200 may be formed in a stack-type structure in which the first electrode plate 210, the separator 230, the second electrode plate 220, and the separator 230 are repeatedly stacked.

Here, the first electrode plate 210 is a positive electrode, and the second electrode plate 220 is a negative electrode.

The first electrode plate 210 includes a first electrode collector 214 provided with a first electrode coating portion 212 on at least one surface thereof. Although FIG. 2A illustrates that the first electrode coating portion 212 is provided on both front and rear surfaces of the first electrode collector 214, the first electrode coating portion 212 may be provided only on one surface of the first electrode collector 214, if necessary. That is to say, if the first electrode plate 210 is provided at the outermost layer of the electrode assembly 200 formed in the stack-type structure, the first electrode coating portion 212 may not be necessarily formed on the surface of the first electrode plate 210 not corresponding to the second electrode plate 220.

Here, the first electrode coating portion 212 is not provided on the entire surface of the first electrode collector 214. That is to say, as shown in FIG. 2A, a non-coating portion is formed on a surface of the first electrode collector 214, unlike the first electrode coating portion 212 in which the non-coating portion is not formed.

The first electrode plate 210 is shaped of a rectangular film. The first electrode plate 210 has four edges. In FIG. 2A, for brevity of explanation, a edge indicated by reference numeral 217a denotes an upper short parallel edge, a edge indicated by reference numeral 217b, which is opposite to the upper edge 217a, denotes a lower short parallel edge, and two edges indicated by reference numerals 217c and 217d, which are adjacent to the upper edge 217a and the lower edge 217b, respectively, denote neighboring long parallel edges.

The first electrode plate 210 has a non-coating portion formed in a circumference 216 of the upper edge 217a. The circumference 216 of the upper edge 217a indicates an inward area having a width from the upper edge 217a. The first electrode plate 210 may also has a first electrode tab 218 provided in the upper edge 217a.

The second electrode plate 220 includes a second electrode collector 224 having a second electrode coating portion 222 provided on at least one surface thereof. Although FIG. 2B illustrates that the second electrode coating portion 222 is provided on both front and rear surfaces of the second electrode collector 224, the second electrode coating portion 222 may be provided only on one surface of the second electrode collector 224, if necessary. That is to say, if the second electrode plate 220 is provided at the outermost layer of the electrode assembly 200 formed in the stack-type structure, the second electrode coating portion 222 may not be necessarily formed on the surface of the first electrode plate 210, not corresponding to the first electrode plate 210.

The second electrode plate 220 includes a second electrode tab 228 provided in an upper edge 227 corresponding to the upper edge 217a that has been described with reference to FIG. 2B.

The separator 230 is interposed between the first electrode plate 210 and the second electrode plate 220 and insulates the first electrode plate 210 and the second electrode plate 220 from each other. In the illustrated embodiment, as shown in FIG. 2B, two sheets of the separator 230 are provided to surround the second electrode plate 220. That is to say, the two sheets of the separator 230 are arranged with the second electrode plate 220 interposed therebetween and the sheets 230 extend beyond the edge of the second electrode plate 230 to form fusing parts 232. The fusing parts of the two sheets of the separator 230 are fused to each other by, for example, thermal fusion or ultrasonic fusion to surround, and encapsulate, the second electrode plate 220.

Meanwhile, multiple layers of the first electrode plate 210 and the second electrode plate 220 having the two sheets of the separator 230 fused thereto are sequentially stacked, thereby forming the electrode assembly 200. First electrode tabs 218 and second electrode tabs 228 are connected by, for example, welding, riveting or other connection methods, thereby forming first electrode lead 242 and second electrode lead 244.

Here, it is necessary to align the first electrode plate 210 with the second electrode plate 220 such that the first electrode coating portion 212 faces the second electrode coating portion 222 over the largest possible area.

Since the first electrode plate 210 and the second electrode plate 220 are of the same size, it is possible to achieve easy alignment of the first electrode plate 210 and the second electrode plate 220. Although FIG. 1 appears to illustrate that the second electrode plate 220 is larger than the first electrode plate 210, it will be understood that the second electrode plate 220 itself is the same size as the first electrode plate 210 and it is only the fusing part 232 of the separator 230, which surrounds the second electrode plate 220, which extends beyond the edge of the first electrode plate 210.

Multiple layers of the first electrode plate 210 and the second electrode plate 220 having two sheets of the separator 230 fused thereto are sequentially stacked, and the first electrode plate 210 and the second electrode plate 220 are aligned with respect to at least one of four edges 217a, 217b, 217c, and 217d of the first electrode plate 210, thereby achieving easy alignment of the first electrode plate 210 and the second electrode plate 220.

Here, since the fusing parts 232 of the separators 230 extending beyond the first electrode plate 210are made of polymeric materials, such as polyethylene (PE) or polypropylene (PP), alignment of the first electrode plates 210 and the second electrode plates 220 is not significantly affected.

FIG. 3 illustrates a first electrode forming an electrode assembly of a secondary battery according to another embodiment of the present invention.Referring to FIG. 3, the secondary battery according to the current embodiment of the present invention is substantially the same as the secondary battery 1000 according to the previous embodiment, except for a first electrode 210a corresponding to the first electrode 210 described in FIG. 1, 2A and 2B. Therefore, the following description will be given with special reference to only a first electrode 210a and thus the detailed description of the other components will be omitted.

As shown in FIG. 3, the first electrode 210a of the secondary battery is different from that of the secondary battery according to the previous embodiment in view of the position of the non-coating portion. That is to say, the non-coating portion is provided at a circumference 216 of the lower short edge 217b. The circumference 216 of the lower short edge 217b indicates an inward area having a predetermined width from the lower short edge 217b.

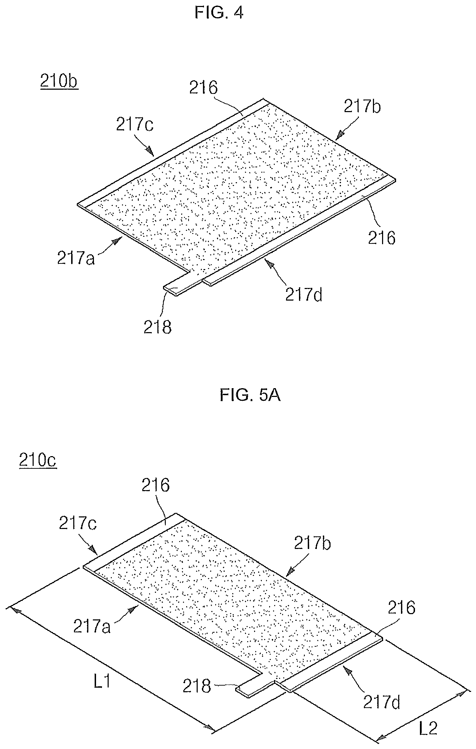

FIG. 4 illustrates a first electrode forming an electrode assembly of a secondary battery according to still another embodiment of the present invention. Referring to FIG. 4, the secondary battery according to the current embodiment of the present invention is substantially the same as the secondary battery 1000 according to the previous embodiment, except for a first electrode 210b corresponding to the first electrode 210 described in FIG. 1, 2A and 2B. Therefore, the following description will be given with special reference to only the first electrode 210b shown in FIG. 4 and thus the detailed description of the other components will be omitted.

As shown in FIG. 4, the first electrode 210 of the secondary battery is different from that of the secondary battery according to the previous embodiment in view of the position of the non-coating portion. That is to say, non-coating portions are provided at one or more circumferences 216 of two neighboring long parallel edges 217c and 217d. Although FIG. 4 illustrates that the non-coating portions are provided at the circumferences 216 of the two neighboring long parallel edges 217c and 217d, the non-coating portions may also be provided at any one of the neighboring long parallel edges 217c and 217d. The non-coating portions indicate inward areas each having a predetermined width from the two neighboring long parallel edges 217c and 217d.

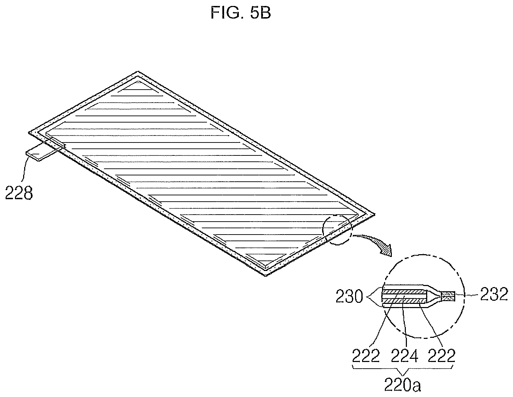

FIGS. 5A and 5B illustrate a first electrode and a second electrode forming an electrode assembly of a secondary battery according to yet another embodiment of the present invention, respectively. Referring to FIGS. 5A and 5B, the secondary battery according to the current embodiment of the present invention is substantially the same as the first electrode 210 and the second electrode 220 of the secondary battery 1000 according to the previous embodiment, except for a first electrode 210c corresponding to the first electrode 210 described in FIG. 1, 2A and 2B.

As shown in FIG. 5A, the first electrode 210c of the secondary battery according to the current embodiment of the present invention is different from that of the secondary battery 1000 according to the previous embodiment in view of the position and the shape of the non-coating portion. That is to say, the non-coating portion is provided at one or more circumferences 216 of two neighboring long parallel edges 217c and 217d. Although FIG. 5 illustrates that the non-coating portions are provided at the circumferences 216 of the two neighboring long parallel edges 217c and 217d, the non-coating portions may also be provided at any one of the neighboring long parallel edges 217c and 217d. The non-coating portions indicate inward areas each having a predetermined width from the two neighboring edges 217c and 217d.

In addition, the first electrode 210c is configured to have a length L1 of the upper edge 217a or the lower edge 217b greater than a length L2 of each of the neighbor edges 217c and 217d.

Further, the first and second electrodes 210c, 220a have the same shape.

Although exemplary embodiments of the present invention have been described for illustrative purposes, those skilled in the art will appreciate that various modifications, additions and substitutions are possible, without departing from the scope of the invention as disclosed in the accompanying claims.

## Claims

1. An electrode assembly for a secondary battery comprising first and second electrode plates (210,220) each having facing surfaces with an electrode coating (212) thereon and, a separator (230) comprising a supporting layer disposed between said facing surfaces and extending across each surface of the second electrode plate (220) to insulate said electrode plates (210,220) from each other, wherein the electrode plates (210,220) are of the same size, wherein the separating layer (230) has regions that extend beyond the peripheral edges of said plate (210,220), said separating layers (230) being coupled to each other beyond said peripheral edges (217a,217b,217c,217d) of said second electrode plate (220) to encapsulate the second electrode plate (220) and insulate it from the first electrode plate (210), said separating layers (230) also extending beyond the peripheral edges of said first electrode plate (210), wherein the separating layer (230) comprises two sheets of material which are arranged with the second electrode plate (220) interposed therebetween and said regions extending beyond the peripheral edges form fusing parts (232) which are fused to each other to encapsulate the second electrode plate (220), **characterised in that** each peripheral edge of the first electrode plate (210) is aligned with a peripheral edge of the second electrode plate (220) and the electrode coating (212) on one of said facing surfaces covers a portion of said surface to provide an uncoated region such that the area of the electrode coating (212) on said one of said facing surfaces is smaller than the area of the electrode coating (222) on the other one of said facing surfaces and wherein the first electrode plate (210) is a positive electrode and the second electrode plate (220) is a negative electrode and the electrode coating (212) covering a portion of a facing surface to provide an uncoated region covers a portion of a facing surface of the positive electrode.

2. An electrode assembly according to claim 1, wherein the electrode coating (212) on the other facing surface covers the whole of said surface.

3. An electrode assembly according to claim 1 or claim 2, wherein said uncoated region is located at a periphery of the facing surface.

4. An electrode assembly according to any preceding claim, wherein the electrode plates (210,220) are rectangular in shape and have two parallel short side edges (217a,217b) and two parallel long side edges (217c,217d).

5. An electrode assembly according to claim 4, wherein the uncoated region extends from at least one of said parallel short side edges (217a,217b) or from at least one of said parallel long side edges (217c,217d).

6. An electrode assembly according to claims 4 or 5, wherein an electrode tab (218) extends from one of said short side edges (217a,217b) or one of said long side edges (217c,217d).

7. An electrode assembly according to claim 6, wherein the uncoated region extends along one of said short side edges (217a,217b) and the electrode tab (218) extends from the uncoated region.

8. An electrode assembly according to any of claims 2 to 7, wherein each electrode plate (210,220) has a second surface and the electrode coating (222) covers the second surface in addition to the facing surface of each electrode plate (210,220).

9. An electrode assembly according to claim 8, wherein the electrode coating (222) which covers a portion of the facing surface to provide an uncoated region on said positive electrode (210) also covers a portion of the second surface of said same electrode (210) to provide an uncoated region on said second surface.

10. A secondary battery formed from a plurality of electrode assemblies according to any preceding claim, said electrode assemblies being positioned in stacked relation.

11. A secondary battery according to claim 10, wherein the first and second electrode plates (210,220) and the separator (230) of each electrode assembly are positioned in stacked relation.

12. A method of manufacturing an electrode assembly for a secondary battery comprising positive and negative electrode plates (210,220) of the same size and each having facing surfaces with an electrode coating (212) thereon, and a separator (230) comprising a separator layer disposed between said facing surfaces and extending across each surface of the second electrode plate (220) to insulate said electrode plates (210,220) from each other, wherein the method includes the step of selecting the separating layers (230) so that they extend beyond the peripheral edges (217a,217b,217c,217d) of the positive and negative electrode plates (210,220) and coupling said layers (230) beyond said peripheral edges to encapsulate the negative electrode plate (220) and insulate it from the positive electrode plate (210), said separating layers (230) also extending beyond the peripheral edges of said positive electrode plate (210), wherein the separating layer (230) comprises two sheets of material which are arranged with the negative electrode plate (220) interposed therebetween and said regions extending beyond the peripheral edges form fusing parts (232) which are fused to each other to encapsulate the negative electrode plate (220), wherein the method further comprises the steps of arranging the positive and negative electrode plates (210, 220) such that each peripheral edge of the positive electrode plate (210) is aligned with a peripheral edge of the negative electrode plate (220) and covering a portion of one of said surfaces of the positive electrode plate (210) with an electrode coating (212) to provide an uncoated region such that the area of the electrode coating (212) on said one of said facing surfaces of the positive electrode plate (210) is smaller than the area of the electrode coating (222) on the other one of said facing surfaces of the negative electrode plate (220).

## Patentansprüche

1. Elektrodenanordnung für eine Sekundärbatterie, umfassend eine erste und zweite Elektrodenplatte (210, 220), die jeweils Außenflächen mit einer Elektrodenbeschichtung (212) darauf aufweisen, und einen Separator (230), umfassend eine Stützschicht, die zwischen den Außenflächen angeordnet ist und sich über jede Oberfläche der zweiten Elektrodenplatte (220) hinweg erstreckt, um die Elektrodenplatten (210, 220) voneinander zu isolieren, wobei die Elektrodenplatten (210, 220) die gleiche Größe haben, wobei die separierende Schicht (230) Bereiche aufweist, die sich über die peripheren Kanten der Platte (210, 220) hinaus erstrecken, wobei die separierenden Schichten (230) über die peripheren Kanten (217a, 217b, 217c, 217d) der zweiten Elektrodenplatte (220) hinaus aneinander gekoppelt sind, um die zweite Elektrodenplatte (220) einzukapseln und sie von der ersten Elektrodenplatte (210) zu isolieren, wobei die separierenden Schichten (230) sich auch über die peripheren Kanten der ersten Elektrodenplatte (210) hinaus erstrecken, wobei die separierende Schicht (230) zwei flächige Materialgebilde umfasst, die mit der zweiten Elektrodenplatte (220) dazwischen eingefügt angeordnet sind, und die sich über die peripheren Kanten hinaus erstreckenden Bereiche Verschmelzungsteile (232) bilden, die miteinander verschmolzen sind, um die zweite Elektrodenplatte (220) einzukapseln, **dadurch gekennzeichnet, dass** jede periphere Kante der ersten Elektrodenplatte (210) mit einer peripheren Kante der zweiten Elektrodenplatte (220) ausgerichtet ist und die Elektrodenbeschichtung (212) auf einer der Außenflächen einen Abschnitt der Oberfläche abdeckt, um einen unbeschichteten Bereich derart bereitzustellen, dass die Fläche der Elektrodenbeschichtung (212) auf der einen der Außenflächen kleiner als die Fläche der Elektrodenbeschichtung (222) auf der anderen der Außenflächen ist, und wobei die erste Elektrodenplatte (210) eine positive Elektrode ist und die zweite Elektrodenplatte (220) eine negative Elektrode ist und die Elektrodenbeschichtung (212), die einen Abschnitt einer Außenfläche abdeckt, um einen unbeschichteten Bereich bereitzustellen, einen Abschnitt einer Außenfläche der positiven Elektrode abdeckt.

2. Elektrodenanordnung nach Anspruch 1, wobei die Elektrodenbeschichtung (212) auf der anderen Außenfläche die Oberfläche vollständig abdeckt.

3. Elektrodenanordnung nach Anspruch 1 oder Anspruch 2, wobei der unbeschichtete Bereich sich an einer Peripherie der Außenfläche befindet.

4. Elektrodenanordnung nach einem vorangehenden Anspruch, wobei die Elektrodenplatten (210, 220) eine rechteckige Form haben und zwei parallele kurze Seitenkanten (217a, 217b) und zwei parallele lange Seitenkanten (217c, 217d) aufweisen.

5. Elektrodenanordnung nach Anspruch 4, wobei der unbeschichtete Bereich sich von mindestens einer der parallelen kurzen Seitenkanten (217a, 217b) aus oder von mindestens einer der parallelen langen Seitenkanten (217c, 217d) aus erstreckt.

6. Elektrodenanordnung nach den Ansprüchen 4 oder 5, wobei sich eine Elektrodenzunge (218) von einer der kurzen Seitenkanten (217a, 217b) oder einer der langen Seitenkanten (217c, 217d) aus erstreckt.

7. Elektrodenanordnung nach Anspruch 6, wobei der unbeschichtete Bereich sich entlang einer der kurzen Seitenkanten (217a, 217b) erstreckt und die Elektrodenzunge (218) sich von dem unbeschichteten Bereich aus erstreckt.

8. Elektrodenanordnung nach einem der Ansprüche 2 bis 7, wobei jede Elektrodenplatte (210, 220) eine zweite Oberfläche aufweist und die Elektrodenbeschichtung (222) die zweite Oberfläche zusätzlich zu der Außenfläche jeder Elektrodenplatte (210, 220) abdeckt.

9. Elektrodenanordnung nach Anspruch 8, wobei die Elektrodenbeschichtung (222), die einen Abschnitt der Außenfläche abdeckt, um einen unbeschichteten Bereich auf der positiven Elektrode (210) bereitzustellen, auch einen Abschnitt der zweiten Oberfläche derselben Elektrode (210) abdeckt, um einen unbeschichteten Bereich auf der zweiten Oberfläche bereitzustellen.

10. Sekundärbatterie, die aus einer Mehrzahl von Elektrodenanordnungen nach einem vorangehenden Anspruch gebildet ist, wobei die Elektrodenanordnungen in Bezug aufeinander gestapelt angeordnet sind.

11. Sekundärbatterie nach Anspruch 10, wobei die erste und zweite Elektrodenplatte (210, 220) und der Separator (230) jeder Elektrodenanordnung in Bezug aufeinander gestapelt angeordnet sind.

12. Verfahren zur Herstellung einer Elektrodenanordnung für eine Sekundärbatterie, umfassend eine positive und negative Elektrodenplatte (210, 220), die die gleiche Größe haben und jeweils Außenflächen mit einer Elektrodenbeschichtung (212) darauf aufweisen, und einen Separator (230), umfassend eine Separatorschicht, die zwischen den Außenflächen angeordnet ist und sich über jede Oberfläche der zweiten Elektrodenplatte (220) hinweg, um die Elektrodenplatten (210, 220) voneinander zu isolieren, wobei das Verfahren den Schritt eines Auswählens der separierenden Schichten (230), so dass sie sich über die peripheren Kanten (217a, 217b, 217c, 217d) der positiven und negativen Elektrodenplatte (210, 220) hinaus erstrecken, und eines Koppelns der Schichten (230) über die peripheren Kanten hinaus, um die negative Elektrodenplatte (220) einzukapseln und sie von der positiven Elektrodenplatte (210) zu isolieren, umfasst, wobei die separierenden Schichten (230) sich auch über die peripheren Kanten der positiven Elektrodenplatte (210) hinaus erstrecken, wobei die separierende Schicht (230) zwei flächige Materialgebilde umfasst, die mit der negativen Elektrodenplatte (220) dazwischen eingefügt angeordnet sind, und die sich über die peripheren Kanten hinaus erstreckenden Bereiche Verschmelzungsteile (232) bilden, die miteinander verschmolzen werden, um die negative Elektrodenplatte (220) einzukapseln, wobei das Verfahren ferner folgende Schritte umfasst: Anordnen der positiven und negativen Elektrodenplatte (210, 220) derart, dass jede periphere Kante der positiven Elektrodenplatte (210) mit einer peripheren Kante der negativen Elektrodenplatte (220) ausgerichtet ist, und Abdecken eines Abschnitts einer der Oberflächen der positiven Elektrodenplatte (210) mit einer Elektrodenbeschichtung (212), um einen unbeschichteten Bereich derart bereitzustellen, dass die Fläche der Elektrodenbeschichtung (212) auf der einen der Außenflächen der positiven Elektrodenplatte (210) kleiner als die Fläche der Elektrodenbeschichtung (222) auf der anderen der Außenflächen der negativen Elektrodenplatte (220) ist.

## Revendications

1. Ensemble d'électrode destiné à une batterie secondaire comprenant des première et deuxième plaques d'électrodes (210, 220) ayant chacune des surfaces opposées l'une à l'autre sur lesquelles est présent un revêtement d'électrode (212) et un séparateur (230) comprenant une couche de support disposée entre lesdites surfaces opposées l'une à l'autre et s'étendant sur chaque surface de la deuxième plaque d'électrode (220) pour isoler lesdites plaques d'électrodes (210, 220) l'une de l'autre, dans lequel les plaques d'électrodes (210, 220) sont de même taille, dans lequel la couche de séparation (230) comporte des régions qui s'étendent au-delà des bords périphériques de ladite plaque (210, 220), lesdites couches de séparation (230) étant couplées l'une à l'autre au-delà desdits bords périphériques (217a, 217b, 217c, 217d) de ladite deuxième plaque d'électrode (220) pour encapsuler la deuxième plaque d'électrode (220) et l'isoler de la première plaque d'électrode (210), lesdites couches de séparation (230) s'étendant également au-delà des bords périphériques de ladite première plaque d'électrode (210), dans lequel la couche de séparation (230) comprend deux feuilles de matériau qui sont agencées de façon que la deuxième plaque d'électrode (220) soit interposée entre celles-ci et lesdites régions s'étendant au-delà des bords périphériques forment des parties fusionnantes (232) qui sont fusionnées l'une à l'autre pour encapsuler la deuxième plaque d'électrode (220), **caractérisé en ce que** chaque bord périphérique de la première plaque d'électrode (210) est aligné avec un bord périphérique de la deuxième plaque d'électrode (220) et **en ce que** le revêtement d'électrode (212) présent sur l'une desdites surfaces opposées l'une à l'autre recouvre une partie de ladite surface pour former une région non revêtue de façon que la superficie du revêtement d'électrode (212) présent sur ladite une desdites surfaces opposées l'une à l'autre soit inférieure à la superficie du revêtement d'électrode (222) présent sur ladite autre desdites surfaces opposées l'une à l'autre et dans lequel la première plaque d'électrode (210) est une électrode positive et la deuxième plaque d'électrode (220) est une électrode négative et le revêtement d'électrode (212) recouvrant une partie d'une surface opposée pour former une région non revêtue recouvre une partie d'une surface opposée de l'électrode positive.

2. Ensemble d'électrode selon la revendication 1, dans lequel le revêtement d'électrode (212) présent sur l'autre surface opposée recouvre la totalité de ladite surface.

3. Ensemble d'électrode selon la revendication 1 ou la revendication 2, dans lequel ladite région non revêtue est située à une périphérie de la surface opposée.

4. Ensemble d'électrode selon l'une quelconque des revendications précédentes, dans lequel les plaques d'électrodes (210, 220) sont de forme rectangulaire et ont deux bords latéraux courts parallèles (217a, 217b) et deux bords latéraux longs parallèles (217c, 217d).

5. Ensemble d'électrode selon la revendication 4, dans lequel la région non revêtue s'étend depuis au moins l'un desdits bords latéraux courts parallèles (217a, 217b) ou depuis au moins l'un desdits bords latéraux longs parallèles (217c, 217d).

6. Ensemble d'électrode selon les revendications 4 ou 5, dans lequel une patte d'électrode (218) s'étend depuis l'un desdits bords latéraux courts (217a, 217b) ou depuis l'un desdits bords latéraux longs (217c, 217d).

7. Ensemble d'électrode selon la revendication 6, dans lequel la région non revêtue s'étend le long de l'un desdits bords latéraux courts (217a, 217b) et la patte d'électrode (218) s'étend depuis la région non revêtue.

8. Ensemble d'électrode selon l'une quelconque des revendications 2 à 7, dans lequel chaque plaque d'électrode (210, 220) comporte une deuxième surface et le revêtement d'électrode (222) recouvre la deuxième surface en plus de la surface opposée de chaque plaque d'électrode (210, 220).

9. Ensemble d'électrode selon la revendication 8, dans lequel le revêtement d'électrode (222) qui recouvre une partie de la surface opposée pour former une région non revêtue sur ladite électrode positive (210) recouvre également une partie de la deuxième surface de ladite même électrode (210) destinée à former une région non revêtue sur ladite deuxième surface.

10. Batterie secondaire formée à partir d'une pluralité d'ensembles d'électrodes selon l'une quelconque des revendications précédentes, lesdits ensembles d'électrodes étant positionnés en relation empilée.

11. Batterie secondaire selon la revendication 10, dans lequel les première et deuxième plaques d'électrodes (210, 220) et le séparateur (230) de chaque ensemble d'électrode sont positionnés en relation empilée.

12. Procédé de fabrication d'un ensemble d'électrode destiné à une batterie secondaire comprenant des plaques d'électrodes positives et négatives (210, 220) de même taille et ayant chacune des surfaces opposées l'une à l'autre sur lesquelles est présent un revêtement d'électrode (212), et un séparateur (230) comprenant une couche de séparateur disposée entre lesdites surfaces opposées l'une à l'autre et s'étendant sur chaque surface de la deuxième plaque d'électrode (220) pour isoler lesdites plaques d'électrodes (210, 220) l'une de l'autre, dans lequel le procédé comprend l'étape consistant à sélectionner les couches de séparation (230) de manière à ce qu'elles s'étendent au-delà des bords périphériques (217a, 217b, 217c, 217d) des plaques d'électrodes positives et négatives (210, 220) et à coupler lesdites couches (230) au-delà desdits bords périphériques pour encapsuler la plaque d'électrode négative (220) et l'isoler de la plaque d'électrode positive (210), lesdites couches de séparation (230) s'étendant également au-delà des bords périphériques de ladite plaque d'électrode positive (210), dans lequel la couche de séparation (230) comprend deux feuilles de matériau qui sont agencées de façon que la plaque d'électrode négative (220) soit interposée entre celles-ci et lesdites régions s'étendant au-delà des bords périphériques forment des parties fusionnantes (232) qui sont fusionnées l'une à l'autre pour encapsuler la plaque d'électrode négative (220), dans lequel le procédé comprend en outre les étapes consistant à agencer les plaques d'électrodes positives et négatives (210, 220) de façon que chaque bord périphérique de la plaque d'électrode positive (210) soit aligné avec un bord périphérique de la plaque d'électrode négative (220) et à recouvrir une partie de l'une desdites surfaces de la plaque d'électrode positive (210) d'un revêtement d'électrode (212) destiné à fournir une région non revêtue de façon que la superficie du revêtement d'électrode (212) présent sur ladite une desdites surfaces opposées l'une à l'autre de la plaque d'électrode positive (210) soit inférieure à la superficie du revêtement d'électrode (222) présent sur ladite autre desdites surfaces opposées l'une à l'autre de la plaque d'électrode négative (220).
